# EUROPEAN PATENT SPECIFICATION

(11) **EP 2 184 689 B1**
(45) Date of publication and mention of the grant of the patent: **29.04.2015**
(21) Application number: 09013912.2
(22) Date of filing: 05.11.2009
(51) Int. Cl.: G06F 17/30

(54) **Normalizing a filter condition of a database query**
Normierung einer Filterbedingung einer Datenbankabfrage
Normalisation d'une condition de filtre d'une demande de base de données

(30) Priority: 07.11.2008 US 266571
(43) Date of publication of application: 12.05.2010
(73) Proprietor: Business Objects, S.A., 92309 Levallois-Perret (FR)
(72) Inventor: Le Biannic, Yann, 92309 Levallois-Perret (FR)
(74) Representative: Müller-Boré & Partner Patentanwälte PartG mbB

(56) References cited:
- WO-A1-2006/136025
- WO-A2-03/012698

## Description

### FIELD OF THE INVENTION

The invention generally relates to the field of multi-dimensional data sources and systems. More particularly the invention relates to converting a database query involving a propositional formula to a multi-dimensional expression query by normalizing and translating the database query.

### BACKGROUND OF THE INVENTION

Queries are used create, modify, retrieve and manipulate data in a data source, such as, a database, a data warehouse, a plurality of reports, and the like. Filtering is the application of filters. A filter is a condition used to limit information retrieved from a data source to a subset of the whole result of an unfiltered query. Filters are usually expressed in form a propositional formula that states the condition.

OLAP tools are a subset of business intelligence tools. There are a number of commercially available OLAP tools including BusinessObjects OLAP Voyager™ which is available from Business Objects of San Jose, California. OLAP tools are a report generation tool, and a tool suited to *ad hoc* analyses. OLAP generally refers to a technique of providing fast analysis of shared multi-dimensional information stored in a database. In some OLAP tools the data is arranged in a schema which simulates a multidimensional schema. Conceptually the information is in a hyper cube. The multi-dimensional schema means redundant information is stored, but it allows for users to initiate queries without the need to know how the data is organized.

Multidimensional Expressions (MDX) is a query language for OLAP databases, like SQL is a query language for relational databases. Thus, an MDX statement can be used to query for a result from an OLAP data source, i.e., a cube. The MDX statement can resemble SQL statements where one can ask for data on a row and columns from a cube. As with an SQL query, each MDX query requires a data request (the "SELECT" clause), a starting point (the "FROM" clause), and a filter (the "WHERE" clause). These and other keywords provide the tools used to extract specific portions of data from a cube for analysis, e.g., to extract a slice.

SQL queries are used to generate a two dimensional result - zero or more rows. This result is a relation. The query process includes selecting columns; selecting from relations; and applying filters using predicates. MDX queries are used to generate a multidimensional result - the result is a (hyper-) cube. The process includes selecting sets of members; selecting from a cube; and applying filters. The filters are set operators for members & predicates for values. Not all SQL queries can be converted MDX queries. Most filter conditions cannot be directly translated as predicates.

Document WO 2006/136025 A1 relates to a method for mapping a data source of an unknown configuration, comprising the steps of submitting a request for metadata to the data source of the unknown configuration; generating a relational schema from the known configuration based on the metadata received from the data source of the unknown configuration; and returning the metadata of the generated relational schema which maps the data source of the unknown configuration to the known configuration.

### SUMMARY OF THE INVENTION

Described are a computer-readable medium according to claim 1, 6 method according to claim 14 and, system according to claim 11 for receiving a query in a first format, parsing the query to determine a result object, a data source and a filter condition in the query. The filter condition is converted to a normalized filter condition by analyzing a semantic context of one or more member sets in the filter condition, converting the one or more member sets into a normal form and replacing logical operators between the one or more member sets with normalized operators. The normalized filter condition along with the result object and the data source is then translated to a multi-dimensional expression query in a second format.

### BRIEF DESCRIPTION OF THE DRAWINGS

The following description includes discussion of figures having illustrations given by way of example of implementations of embodiments of the invention. The drawings should be understood by way of example, and not by way of limitation. As used herein, references to one or more "embodiments" are to be understood as describing a particular feature, structure, or characteristic included in at least one implementation of the invention. Thus, phrases such as "in one embodiment" or "in an alternate embodiment" appearing herein describe various embodiments and implementations of the invention, and do not necessarily all refer to the same embodiment. However, they are also not necessarily mutually exclusive.
FIG. 1 is a flow diagram for converting a query in a first format to a multi-dimensional expression (MDX) query in a second format according to an embodiment of the invention.
FIG. 2 is an exemplary screen display of a user interface to create a query in a first format according to an embodiment of the invention.
FIG. 3 is a flow diagram for normalizing a filter condition of the query in the first format according to an embodiment of the invention.
FIG. 4 is an illustration of semantic analysis of a filter condition in a query of FIG. 2 according to an embodiment of the invention.
FIG. 5 is a flow diagram for analyzing a filter condition to determine a semantic context of member sets in the filter condition according to an embodiment of the invention.
FIG. 6 is a flow diagram for converting the filter condition to normal form according to an embodiment of the invention.
FIG. 7A is a flow diagram for replacing logical operators with normalized operators in the filter condition according to an embodiment of the invention.
FIG. 7B continues the example in FIG. 4 and is an illustration of replacing logical operators with normalized operators in the filter condition according to an embodiment of the invention.
FIG. 8 is an example of converting a logical expression to conjunctive normal form according to an embodiment of the invention.
FIG. 9 is an example of the conversion of a part of a filter condition to a disjunctive normal form according to an embodiment of the invention.
FIG. 10 shows the optimizing of an example filter condition by replacing an IAND operator with CAND operator according to an embodiment of the invention.
FIG. 11 is a normalization graph depicting structure of a normalized filter condition according to an embodiment of the invention.
FIG. 12 continues the example in FIGS. 2 and 7B by showing a normalized query of FIG.2 according to an embodiment of the invention.
FIG. 13 furthers the example in FIG. 12 by showing a translation of a result object in a normalized query to a first part of an MDX query according to an embodiment of the invention.
FIG. 14 extends the example in FIGS. 7B and 13 by illustrating the translation a normalized filter condition of the normalized query to a second part of the MDX query according to an embodiment of the invention.
FIG. 15 continues the example in FIG. 14 by depicting the MDX query of a query of FIG. 2 according to an embodiment of the invention.
FIG. 16 is a flow diagram for converting a normalized query to a multi-dimensional expression query according to an embodiment of the invention.
FIG. 17 depicts a table of a source query filter condition, its normalized filter condition and MDX filter condition according to an embodiment of the invention.
FIG. 18 is a block diagram for converting a query in a first format to the MDX query in the second format according to an embodiment of the invention.

### DETAILED DESCRIPTION

In a multi-dimensional database such as an online analytical processing (OLAP) cube contains data in various dimensions such as products, people, geography, financial elements, and time. A dimension may have a number of hierarchical levels in it. For example, dimension geography may have at least three hierarchical levels namely country, state, and district. A measure or a metric is a quantity as ascertained by comparison with a standard, usually denoted in some metric, for example, units sold and dollars.

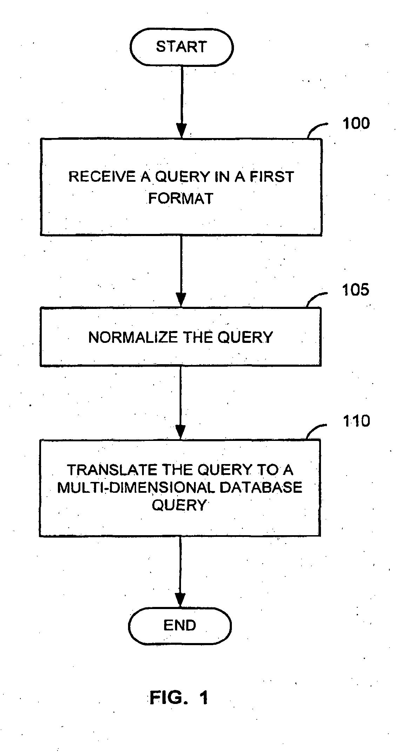

FIG. 1 is a flow diagram for converting a query in a first format to a multi-dimensional expression (MDX) query in a second format according to an embodiment of the invention. The MDX query is used to access data in a multi-dimensional database such as the OLAP cube. At process block 100, a query in a first format is received. An example of the first format includes a structured query language (SQL), other declarative query languages, and a query created in a declarative way using a user interface such as a query panel in the BusinessObjects Web Intelligence™ product provided by Business Objects Americas of San Jose in California. At process block 105, the query is normalized into a canonical form that is suitable for a translation to the MDX query. A canonical form (often called normal form or standard form) of an object is a standard way of presenting that object. The normalization process converts a filter condition in the query to a structured pattern wherein each structured pattern has a defined MDX query translation. At process block 110, the normalized query is translated to the MDX query in a second format. An example of the second format includes query languages such as Analysis Services (AS) 2000 and AS 2005 provided by Microsoft of Redmond, and MaxL from Oracle Essbase. These query languages are based on a MDX specification defined by Microsoft.

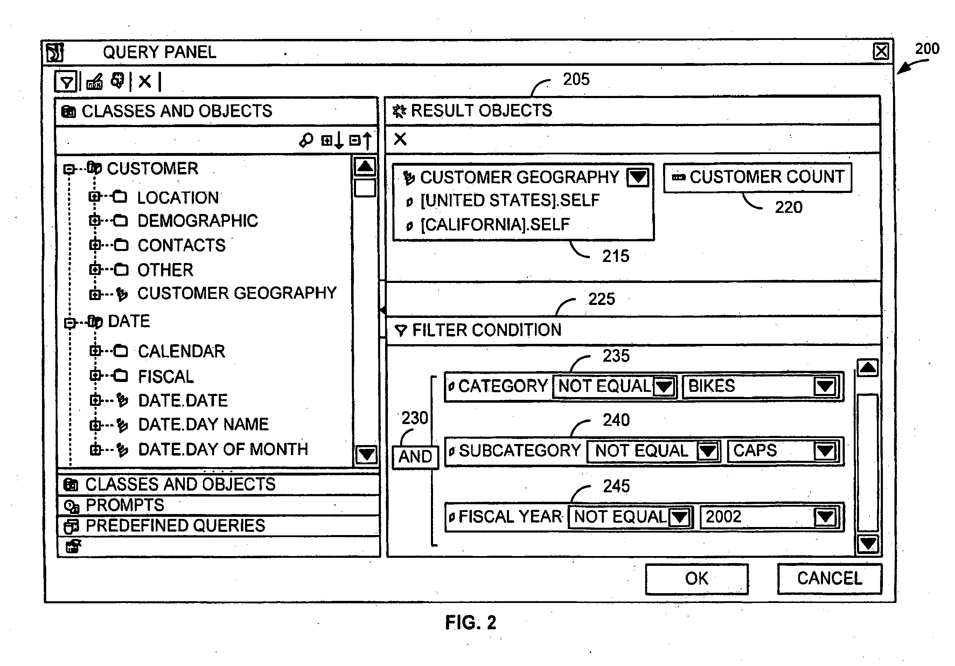

FIG. 2 is an exemplary screen display of a user interface to create a query in a first format according to an embodiment of the invention. A user may create a query in a declarative way using a user interface such as query panel 200. In a declarative way, the query is created by a user selection of result set, data source and filter criteria parameters unlike creating a query by writing a source code. The query in query panel 200 fetches a count of customers in "United States" and "California" those who have bought a product which is not in the category of "bikes", and not in the sub category of "caps" and not in fiscal year "2002". The result set of the query, "a count of customers in United States and California" is defined as customer geography 215 and customer count 220 in result objects 205. The filter criteria of the query, "product not in the category of bikes, not in the sub category of caps and not in fiscal year 2002" are defined in filter condition 225 as first predicate 235, second predicate 240 and third predicate 245 respectively. An AND operator 230 defines the relation between predicates of filter condition 225.

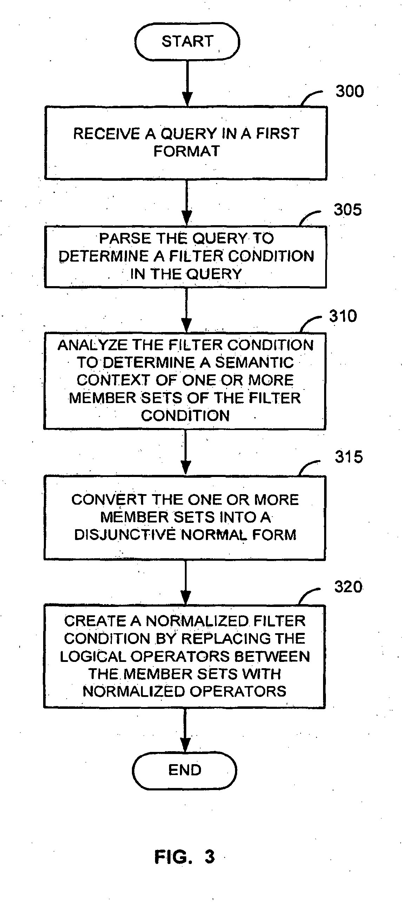

FIG. 3 is a flow diagram for normalizing a filter condition of the query in the first format according to an embodiment of the invention. At process block 300, a query in a first format is received. An example of the query in the first format includes a SQL query and a query created using query panel 200. Along with the query, a query specification is also received to identify a format of the query received. Based on the format received, different parts of the query such as result objects, a filter condition and a data source may be retrieved. At process block 305, the query is parsed to determine a filter condition 225 of the query. At process block 310, filter condition 225 is analyzed to determine a semantic context of member sets in filter condition 225. A member set is a predicate that applies on a single dimension. For example, in filter condition 225, first predicate 235 in the product category and the second predicate 240 in the product sub-category form a single member set since they share a same dimension, product. The third predicate 245 which is on a time dimension forms another member set. The filter condition also includes a predicate that involves a measure. The measure represents a quantity such as revenue, number of units etc. The member set represents a relationship or a property such as name of a product and category of a product.

At process block 315, AND/OR operators applied on analyzed member sets are converted into a normal form that involves multiple layers of conjunctions and disjunctions. In an embodiment, semantically analyzed member sets may be converted into a disjunctive normal form (DNF) in the filter condition. The DNF is a format of logical expression. The DNF is a standard way to write a logical expression that is characterized by one or more disjunctions joining two or more conjunctive clauses. A disjunction is an "OR" operation. The following expressions are in DNF: X∨Y; X; (X ∧Y) ∨ Z and (X ∧ ¬Y ∧ ¬Z) ∨ (¬A ∧ B ∧ C). Logical expressions can be converted to DNF by using logical equivalences.

A conjunction is an "AND" operation. An expression is in conjunctive normal form (CNF) if it is a conjunction of clauses. A conjunctive clause is one or more variables, or negations of a variable - combined by zero, one or more "and" operations. The following expressions are in CNF: X∧Y; (X ∨Y) ∧ (X ∨ Z).

At process block 320, a normalized filter condition is created by replacing logical operators such as "AND" and "OR" between the member sets in the filter condition with normalized operators. The normalized operators include crossjoin-and (CAND), intersect-and (IAND), union-or (UOR) and AGGREGATION FILTER. The CAND operator computes an intersection of member sets of different dimensions. The IAND operator computes an intersection of the member sets of multiple dimensions having at least one common dimension on either side of the logical AND operator. The UOR operator computes a union of member sets of different dimensions. The aggregation filter operator aggregates a measure over the one or more member sets. The logical AND operator computes an intersection of member sets of same dimension and the logical OR operator computes a union of member sets of same dimension.

The normalized filter condition has the member sets in a normal form with normalized operators. The normalized filter condition may be translated to the MDX query in a second format such as AS 2000.

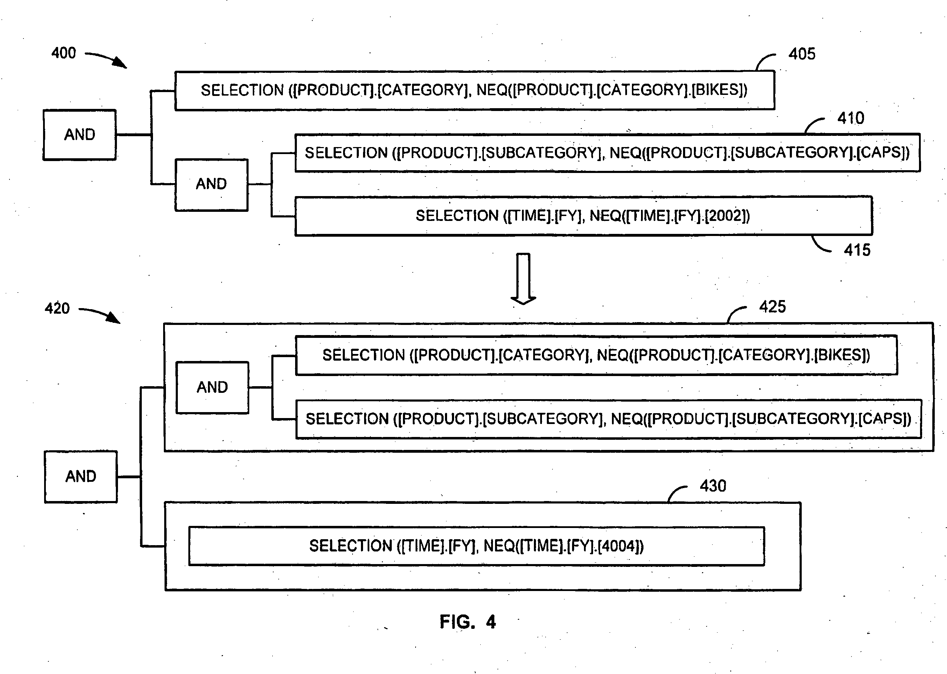

FIG. 4 is an illustrated example of semantic analysis of a filter condition according to an embodiment of the invention. The query of FIG. 2 is analyzed to determine a semantic context for one or more member sets. A first filter condition 400 is a graphical representation of filter condition 225. The first filter condition 400 has three predicates, first predicate 405 having a product category as a filter criterion, second predicate 410 having a product sub category as a filter criterion, and third predicate 415 having a fiscal year as a filter criterion.

The first filter condition 400 is converted to second filter condition 420 after a semantic analysis of first filter condition 400. As a result of semantic analysis, first predicate 405 and second predicate 410 are grouped into first member set 425 since they share a same dimension, product. The third predicate 415 having a different dimension, time, is grouped as second member set 430.

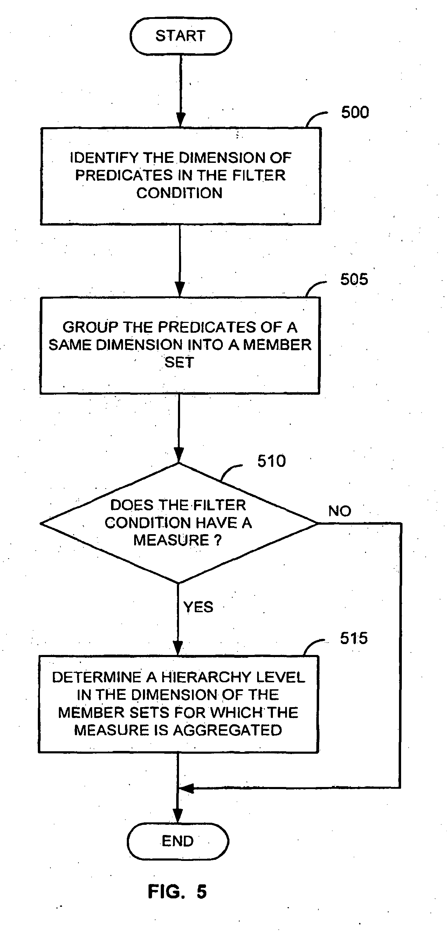

FIG. 5 is a flow diagram for analyzing a filter condition to determine a semantic context of member sets in the filter condition of FIG. 4 according to an embodiment of the invention. At process block 500, the dimensions of predicates in first filter condition 400 are identified. For example, the dimension of first predicate 405 and second predicate 410 is product, and the dimension of third predicate 415 is identified as time. At process block 505, the predicates having a same dimension are grouped into a single member set. Therefore, first predicate 405 and second predicate 410 having the same dimension, product are grouped into first member set 425. The third predicate 415 having the dimension, time is grouped as second member set 430.

At process block 510, it is checked if the filter condition 400 has a measure. If no, the semantic analysis process ends. If yes, then a hierarchy level in the dimension of the member set for which a measure is aggregated is determined. The semantic context for a measure is the list of hierarchical levels in a dimension on which the measure is aggregated. The semantic context is either explicit, that is, associated to the measure within the filter condition or implicit, that is, derived from the result objects of the query. For example, in query panel 200, if the query had below parameters:
Result objects = [Customer].[Country], [Customer].[City], [Product].[Category], [Measures].[Revenue]
Filter Condition = ([Measures].[Revenue] > 100) AND ([Product].[Subcategory] inlist ("beer", "soda"))

The result objects involve two dimensions, customer and product. The deepest hierarchical levels for these two dimensions in result objects are [Customer].[City] which is below [Customer].[Country] and [Product].[Category]. Any measure that appears in filter condition 225 of the query is assumed to be aggregated on [City] and [Category], whatever the hierarchical levels in the rest of filter condition 225 is. The filter condition in the above example involves an aggregation of the measure on [Product].[Subcategory] which is a level below [Category], but [Revenue] is still aggregated on [Category].

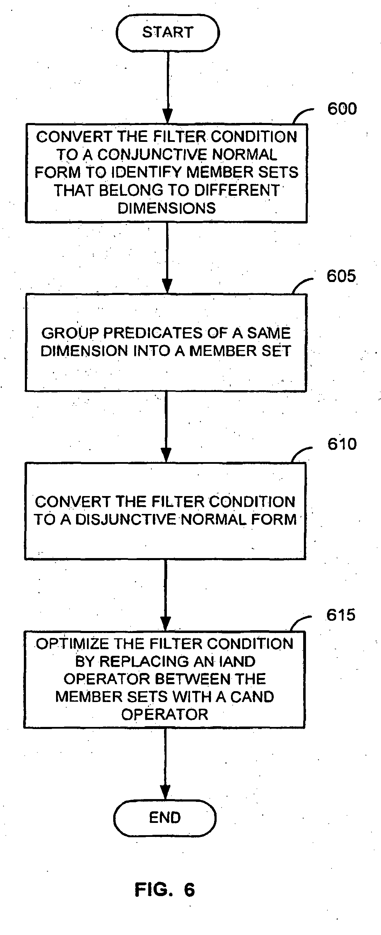

FIG. 6 is a flow diagram showing an example of process block 315 used in some embodiments of the invention. The flow diagram depicts converting the filter condition to disjunctive normal form.. After performing a semantic analysis on the filter condition of the query the predicates have been grouped by like dimensions to form member sets. Now, the member sets in the filter condition are converted to a disjunctive normal form. In a multi-dimensional environment wherein a filter condition has predicates of multiple dimensions, it is more efficient to evaluate the filter condition as a "union of intersections" rather than an "intersection of unions".

At process block 600, the member sets in the filter condition are converted to a conjunctive normal form. The member sets are first converted to CNF in order to separate member sets of different dimensions. Once, the member sets are separated based on their dimension, they can be translated to their respective axis in an MDX query. Consider a filter condition of the form
Filter condition = (A AND B) OR C.
Converting this to CNF based on logical equivalences, we get
Filter condition in CNF = (A OR C) AND (B OR C)

After converting the member sets to CNF, at process block 605, the predicates of the filter condition are again grouped into member sets as described in FIG. 5. At process block 610, the operators on member sets are converted to DNF whenever the filter condition initially involves an intersection of unions of the member sets. After conversion, such a condition is expressed as a union of intersection of member set.
Consider a filter condition in CNF,
Filter condition = ((Count = N) OR (Country in {INDIA, USA})) AND
   Country in {CHINA, INDIA}
Converting to DNF, we get
Filter condition = (Country = INDIA) OR
   ((Count = N) AND (Country in {INDIA, CHINA}))
Where,
OR operator is a union operation; and
AND operator is an intersect operation.

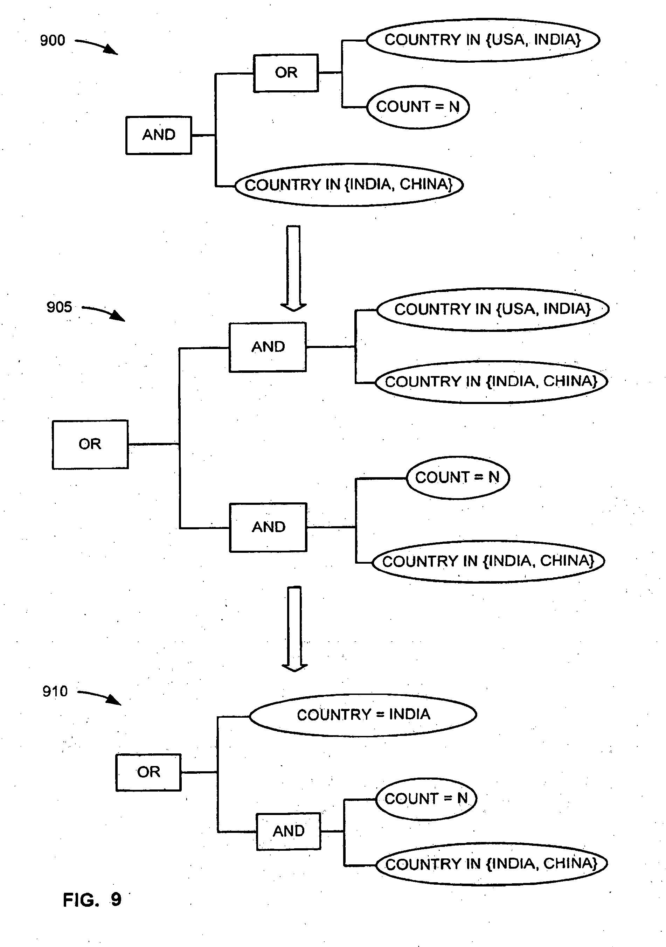

The details of the above conversion are described in FIG. 9. It is more efficient to translate the filter condition in DNF to an MDX query than the filter condition in CNF. Evaluating a statement in DNF is more efficient since as few as one clause needs to be evaluated. Like Evaluation translating a filter condition which is in CNF (as an intersection of unions of the member sets) is typically less efficient.

Finally, at process block 615, the filter condition is optimized by replacing an intersection-AND (IAND) operator with a cross-join AND (CAND) operator. The IAND operator is used to compute an intersection between the member sets of multiple dimensions having at least one dimension in common on either sides of the logical AND operator. A CAND operator is used to compute an intersection between member sets of different dimensions. Translating an IAND operator to an MDX equivalent is more expensive in terms of time and memory than a CAND operator. Hence, the IAND operator is replaced with CAND operator wherever possible.

For example, consider a filter condition,
Filter Condition: (Year ≥ 2007) IAND ((Product = SODA) OR (Year = 2007)). Optimizing the above filter condition by replacing the IAND operator with CAND operator, we get
Filter condition: (Year = 2007) OR ((Year ≥ 2007) CAND (Product = SODA))

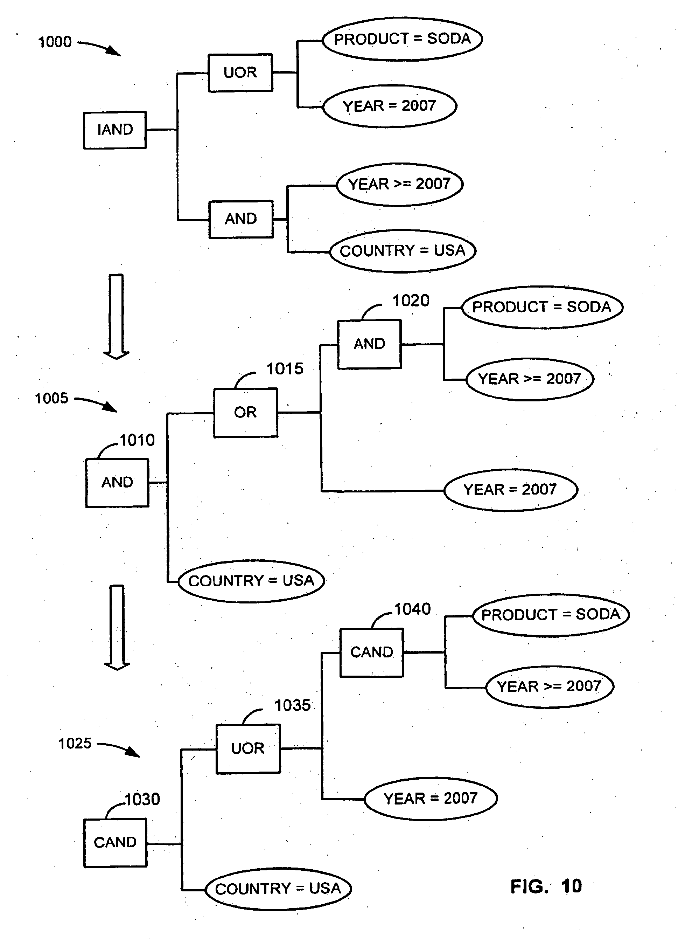

The details of the conversion of the above filter condition are explained in FIG. 10. In another embodiment, it may not be possible to replace an IAND operator with CAND operator in complex queries.

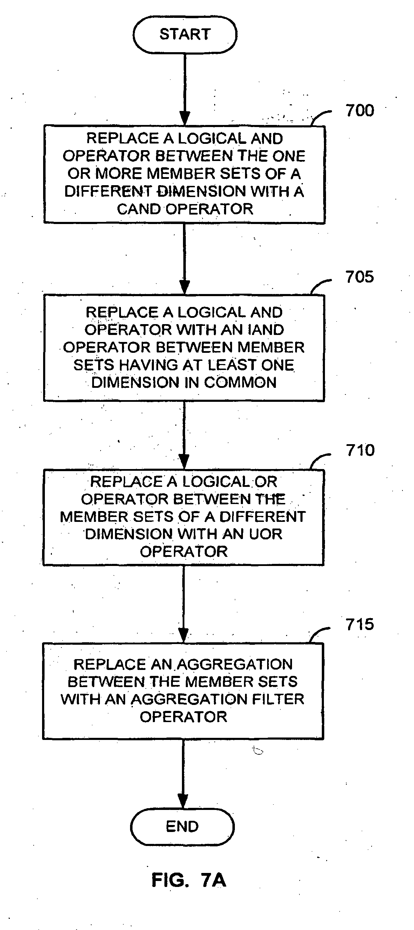

FIG. 7A is a flow diagram for replacing logical operators with normalized operators in the filter condition according to an embodiment of the invention. After processing the filter condition in FIGS. 3, 5 and 6 processing block 320 replaces the logical operators in the filter condition with normalized operators. The normalized operators include but not limited to operators such as CAND, IAND, UOR, AGGREGATION FILTER.

At process block 700, a logical AND operator between the member sets of a different dimension is replaced with a CAND operator. For example, consider
Filter Condition: (Country = USA) AND (Year = 2007)
The member sets on either sides of the AND operator in the above filter condition have different dimensions, geography and time respectively. Hence, the logical AND operator becomes a CAND operator in the normalized filter condition. Therefore, the normalized filter condition reads as
Filter Condition: (Country = USA) CAND (Year = 2007)

At process block 705, a logical AND operator between the member sets of multiple dimensions having at least one dimension in common between the member sets on either sides of the logical AND operator is replaced with an IAND operator. For example, consider a filter condition,
Filter Condition: (Year ≥ 2007) AND ((Product = SODA) OR (Year = 2007))
In the above filter condition, there are multiple dimensions on either side of the AND operator; dimension, time on the left side and dimensions, product and time on the right side of the AND operator. But, the member set (Year ≥ 2007) on the left side of the AND operator and the member set (Year = 2007) on the right side of the operator have the same dimension, time. Therefore, the AND operator is replaced with an IAND operator.
The normalized filter condition will read as
Filter Condition: (Year ≥ 2007) IAND ((Product = SODA) OR (Year = 2007)).

At process block 710, a logical OR operator between the member sets of different dimensions is replaced with a UOR operator. For example, consider a filter condition,
Filter Condition: (Year = 2007) OR (Product = Soda)
Since the member sets (Year = 2007) and (Product = Soda) have different dimensions, time and product, the logical OR operator is replaced with the normalized UOR operator. The normalized filter condition reads as,
Filter Condition: (Year = 2007) UOR (Product = Soda)

At process block 715, an aggregation between the member sets is converted to an AGGREGATION FILTER operator. An aggregation is a function, such as, count, sum, average, min, max and the like, defined over a dimension. It is used to compute a measure value. For example, consider a filter condition
Filter Condition: (Country = USA) AND (Revenue > 1000) is converted to = AGGREGATION FILTER (Country = USA, Revenue > 1000)
The above filter condition means that a result set is first filtered by predicate (Country = USA) and then a measure such as (Revenue > 1000) is applied on the filtered result set.

The logical AND and logical OR operators are replaced with the normalized operators such as CAND, IAND, UOR, AGGREGATION FILTER because each of the normalized operators has a straight forward translation in the MDX query. The process of translating the query becomes easier and efficient if a filter condition in the query is converted to the normalized filter condition.

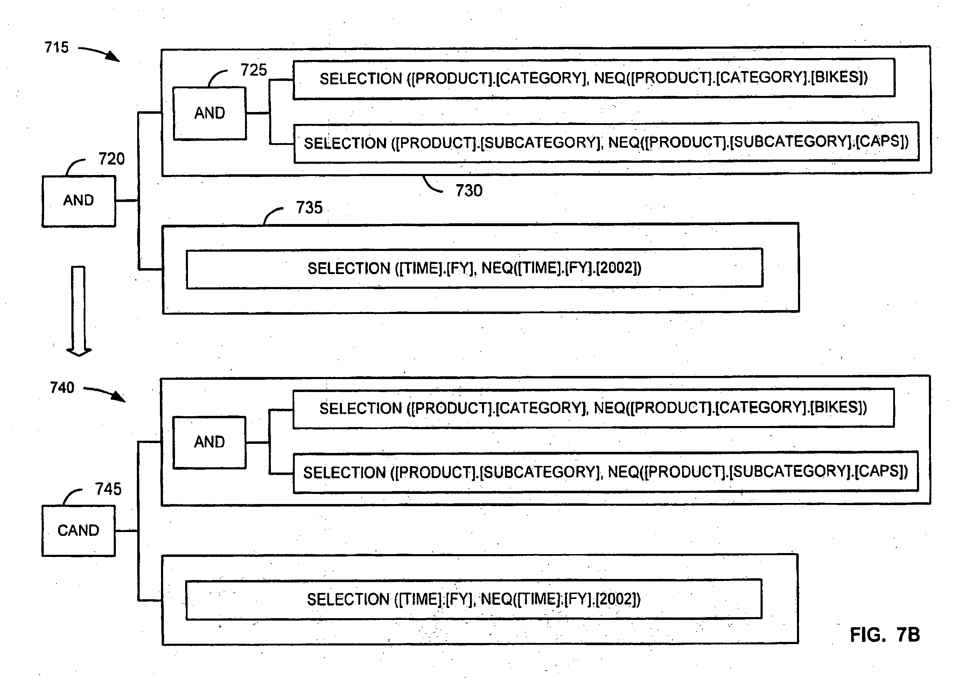

FIG. 7B illustrates replacing logical operators with normalized operators in the filter condition according to an embodiment of the invention. Continuing the example of FIG. 4 the filter condition 715 of the query in query panel 200 is normalized by replacing the logical operators with normalized operators to create a normalized filter condition 740. A first logical AND operator 720 is between a first member set 730 and second member set 735 which are of different dimensions. Hence, the first logical AND operator 720 is replaced with CAND operator 745 in the normalized filter condition 740. A second logical AND operator 725 is retained in the normalized filter condition 740 since it is an AND operation between two predicates of same dimensions.

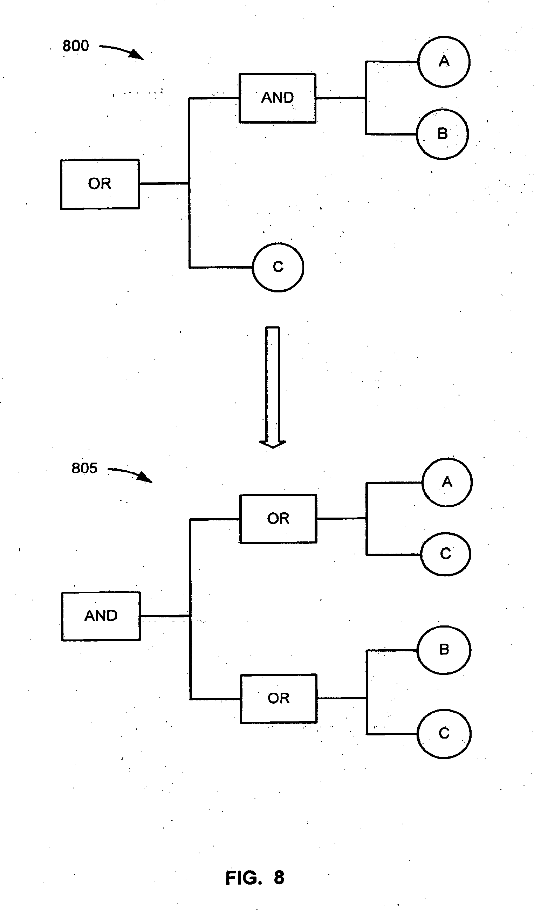

FIG. 8 shows an example of converting a logical expression to conjunctive normal form. Such a conversion is used by some embodiments of the invention to convert filter conditions. The main goal in normalizing a filter condition is to obtain cartesian products on distinct dimensions since these operations are efficiently executed in MDX. Thus, the member sets are first converted to CNF in order to separate member sets of different dimensions. Once, the member sets are separated based on their dimension, they can be projected to their respective axis in an MDX query. Consider a first logical expression 800 which is (A AND B) OR C. Converting first logical expression 800 to CNF based on logical equivalences, we get
= (A AND B) OR (C)
= (A OR C) AND (B OR C)
which is the second logical expression 805.

FIG. 9 is a block diagram for converting the filter condition to a disjunctive normal form according to an embodiment of the invention. After converting the filter condition to CNF and grouping the predicates of the same dimension into member sets, portions of the filter condition that involves a set intersection are converted to DNF. Consider first filter condition 900 which is in CNF. Using on logical equivalences, converting the filter condition 900 to DNF,
= ((Country in {USA, INDIA}) OR (Count = N))
AND
(Country in {INDIA, CHINA})

= (Country in {USA, INDIA }) AND (Country in {INDIA, CHINA })
OR
((Country in {INDIA, CHINA}) AND (Count = N)) which is second filter condition 905. The structural similarity between logical expressions 800 and 805 and filter conditions 900 and 905 should be apparent. Because the filter condition 905 is in disjunctive normal form with AND / Intersection operators between elements of the member sets. And because the member sets are along common dimensions the member sets with the filter conditions can be simplified.
= (Country = INDIA)
OR
((Count = N) AND (Country in {INDIA, CHINA})) which is third filter condition 910 in DNF.

FIG. 10 is a block diagram for optimizing a normalized filter condition by replacing an IAND operator with CAND operator according to an embodiment of the invention. Translating an IAND operator to an MDX equivalent is more expensive in terms of time and memory than a CAND operator. Hence, the IAND operator is replaced with CAND operator wherever possible. The IAND is converted to a logical AND operator, the member sets of different dimensions are separated and the logical AND between the different dimensions is converted to the CAND operator.

In an embodiment, the first normalized filter condition 1000 is optimized by converting an expensive IAND operator to a less expensive CAND operator as follows:
[(Product= SODA) UOR (Year = 2007)]
IAND
(Year ≥ 2007) AND (Country = USA)
The UOR is converted to logical OR. The IAND is converted to logical AND. The predicate with year inequality is distributed over the clause containing OR.
= {[(Product= SODA) AND (Year ≥ 2007)]
OR
[(Year = 2007) AND (Year ≥ 2007)]}
AND
(Country = USA)
Since [(Year = 2007) AND (Year ≥ 2007)] can be simplified.
= {[(Product= SODA) AND (Year ≥ 2007)]
OR
(Year = 2007)}
AND
(Country = USA)
This is filter condition 1005.

Replacing the logical operators in filter condition 1005 with the normalized operators, we get second normalized filter condition 1025. Second normalized filter condition 1025:
= {[(Product= SODA) CAND (Year ≥ 2007)]
UOR
(Year = 2007)}
CAND
(Country = USA)

A first logical AND operator 1010 is replaced with a first CAND operator 1030, a logical OR operator 1015 is replaced with an UOR operator 1035, and a second logical AND operator 1020 is replaced with a second CAND operator 1040 in the normalized filter condition 1025 based on rules described in FIG. 7A. The normalized filter condition is then combined with a result object and a data source of the query to form a normalized query. For instance, consider a query in query panel 200, the normalized query would consist of result objects 205, data source (not shown in the figure) and normalized filter condition 740.

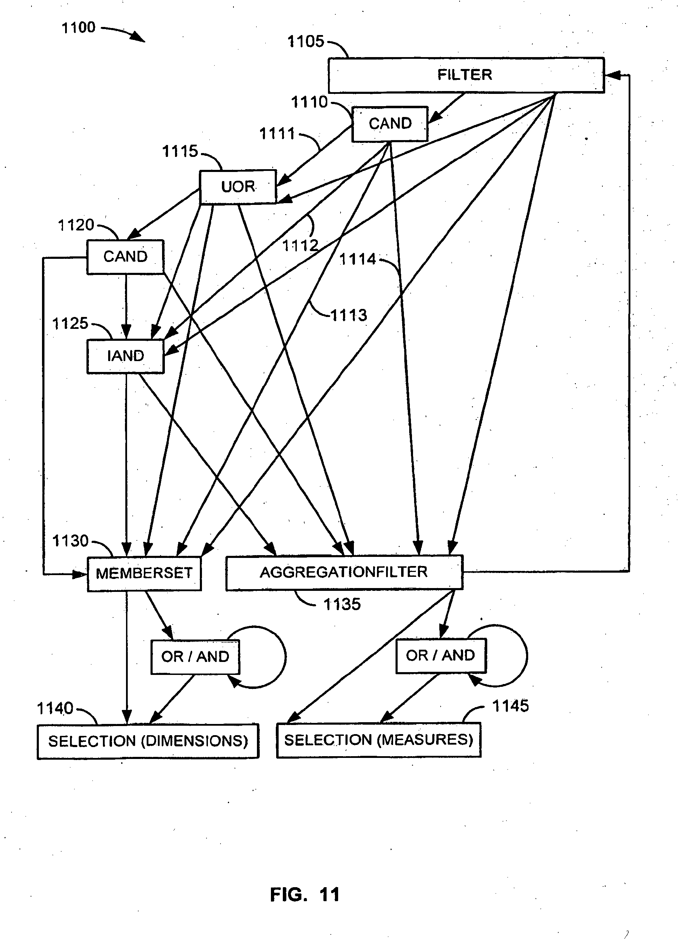

FIG. 11 is a normalization graph 1100 depicting structure of a normalized filter condition 1105 according to an embodiment of the invention. The normalization process as described in FIG. 3 at block 320 reduces the normalized filter condition 1105 to a format described by, and constrained to, the normalization graph 1100 or a sub graph. The normalized filter condition 1105 has normalized operators that include but not limited to CAND 1110, UOR 1115, IAND 1125, MEMBER SET 1130 which is a semantic wrapper that groups predicates of same dimension, and AGGREGATION FILTER 1135 apart from logical AND and OR operators. The normalization graph 1100 shows the structure of the normalized filter condition 1105, that is, order of the normalized operators and operands the normalized operators have in some embodiments. The operator at the top is CAND it separates non overlapping dimensions allowing for easy association with an axis in an MDX query. For instance, operator CAND 1110 may have its operands as operators
UOR 1115 as indicated by first arrow 1111,
IAND 1125 as indicated by second arrow 1112,
MEMBSER SET 1130 as indicated by third arrow 1113, and
AGGREGATION FILTER 1135 as indicated by fourth arrow 1113.
Statements in DNF are faster to evaluate that those in CNF. It is faster to compute unions of low cardinality sets than intersections of high cardinality sets. Hence UOR 1115 may have its operands as operators CAND 1120 and IAND 1125; as well as MEMBSER SET 1130 and AGGREGATION FILTER 1135. Whereas operator IAND 1125 may have only MEMBSER SET 1130 and AGGREGATION FILTER 1135 as its operands.

Similarly, MEMBER SET 1130 may have a selection on dimension 1140 such as "SELECT [PRODUCT].[CATEGORY].&BIKES" as its operand. The AGGREGATION FILTER 1135 may have a selection on measure 1145 such as "SELECT revenue > 100" as its operand.

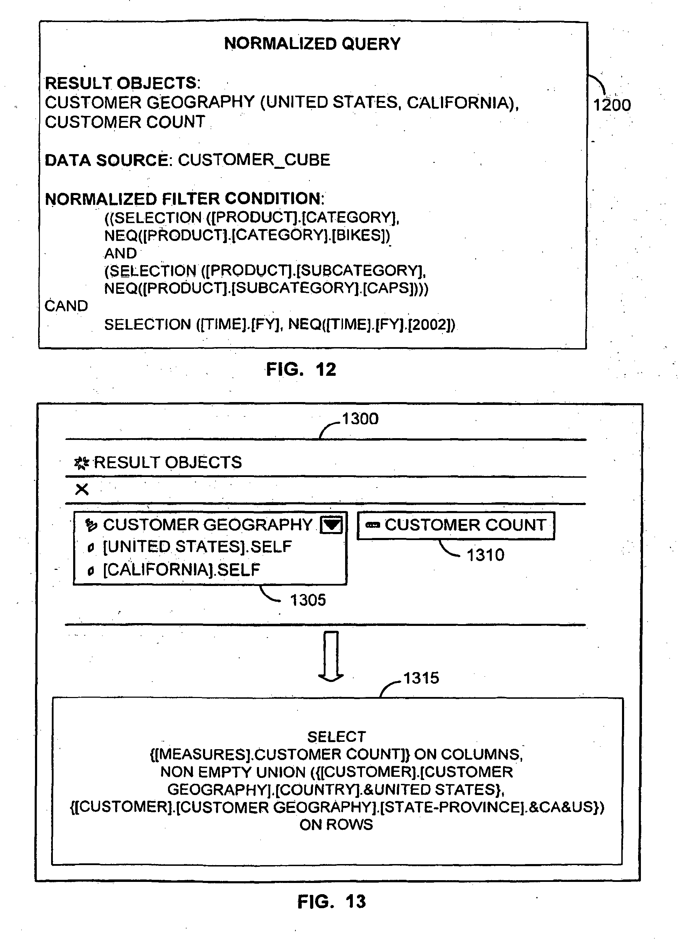

FIG. 12 depicts a normalized query of FIG. 2 according to an embodiment of the invention. The normalized query 1200 has result objects 205, a data source, and a normalized filter condition 740 of the query in query panel 200. The normalized query 1200 forms an input to the MDX query translation process.

FIG. 13 is a block diagram for translating a result object in a normalized query to a first part of an MDX query according to an embodiment of the invention. In an embodiment, the MDX query has a syntax with at least the following three parts:

| | |
|---|---|
| SELECT <query_axis> | (first part) |
| FROM SELECT <slicer_axis> | (second part) |
| ... | |
| ... | |
| FROM <data source> | (third part) |

where
query_axis specifies a result set of the MDX query, that is, result objects 1300;
slicer_axis specifies a filter condition of the MDX query; and
data source specifies a data source such as an OLAP cube from which the data is retrieved.

The result objects 1300 of normalized query 1200 is translated to the query_axis of the SELECT clause. The result set contains two columns, Customer geography 1305, Customer Count 1310 and two rows, one for United States and the other for California. Therefore, result objects 1300 is translated to the first part 1315 of the MDX query as follows:
First part =
   SELECT
      {[Measures].Customer Count]} on columns,
      Non Empty Union
      ({[Customer].[Customer Geography].[Country].&United States},
      {[Customer].[Customer Geography].[State-Province].&Ca&Us}) on rows.

Similarly, a data source specified in normalized query 1200 is translated to a third part of the MDX query as follows:
Third part = FROM (Customer_Cube)

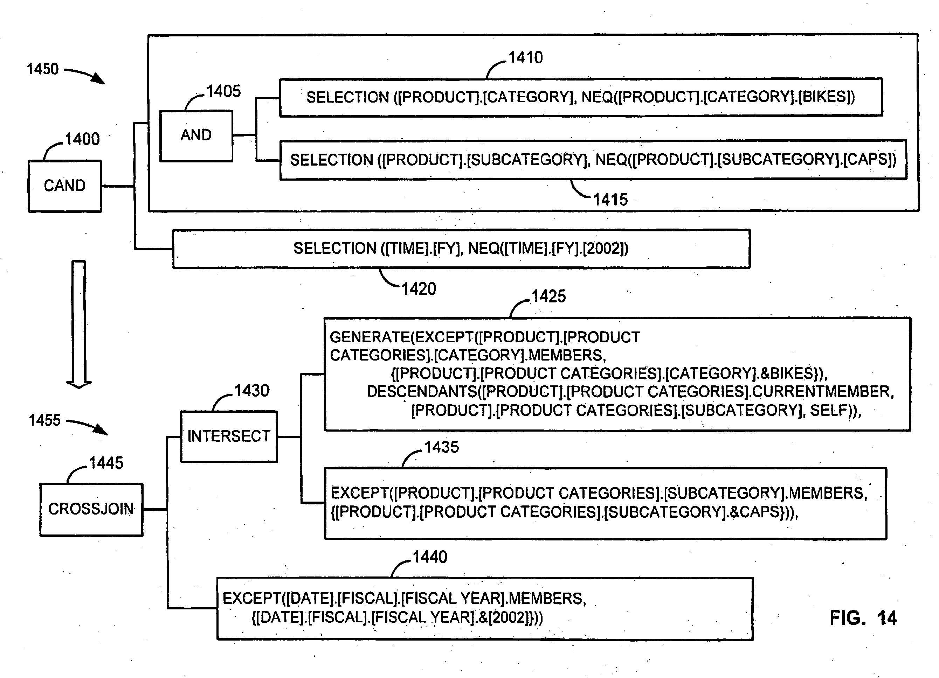

FIG. 14 is a block diagram illustrating the translating of a normalized filter condition of the normalized query 1200 to a second part of the MDX query according to an embodiment of the invention. The normalized filter condition 1450 is translated to the slicer_axis of the FROM SELECT clause of the MDX query. In an embodiment, normalized filter condition 1450 of normalized query 1200 is translated to second part 1455 of the MDX query. In an embodiment the MDX query based on a syntax of the AS 2000 query language. The second part 1455 has MDX operators that include but not limited to CROSSJOIN, INTERSECT, UNION, FROM SELECT UNION, and FILTER. The translation of normalized filter condition 1450 is done based on the multi-dimensional expression translation rules that include but not limited to:
- Translate a CAND operator in the normalized filter condition to MDX CROSSJOIN operator in the MDX query;
- Translate an IAND operator in the normalized filter condition to MDX INTERSECT operator in the MDX query;
- Translate an AND operator in the normalized filter condition to MDX INTERSECT operator in the MDX query;
- Translate an OR operator in the normalized filter condition to MDX UNION operator in the MDX query;
- Translate an UOR operator in the normalized filter condition to MDX FROM SELECT UNION operator in the MDX query;
- Translate an AGGREGATIONFILTER operator in the normalized filter condition to MDX FILTER operator in the MDX query; and
- Translate predicates in the normalized filter condition to the MDX query based on syntax of the MDX language.

Based on the above rules normalized filter condition 1450 is translated to second part 1455 as follows:
- CAND operator 1400 is translated to CROSSJOIN operator 1445;
- AND operator 1405 is translated to INTERSECT operator 1430; and
- Predicates, first predicate 1410, second predicate 1415, and third predicate 1420 are translated to predicates fourth predicate 1425, fifth predicate 1435 and sixth predicate 1440 respectively based on syntax of AS 2000 query language.
After the translation, the second part 1455 of the MDX query reads as follows:
Second part =
   FROM (SELECT
   CROSSJOIN (
      INTERSECT (
         GENERATE (
            EXCEPT (
               [Product].[ProductCategories].[Category].Members,
               {[Product].[ProductCategories].[Category].&Bikes}),
            DESCENDANTS (
               [Product]. [Product Categories].Currentmember,
               [Product].[Product Categories].[Subcategory], Self),
         EXCEPT (
            [Product]. [Product Categories]. [Subcategory].Members,
            {[Product].[Product Categories].[Subcategory].&CAPS})),
      EXCEPT (
         [Date].[Fiscal].[Fiscal Year].Members,
         {[Date].[Fiscal].[Fiscal Year].&[2002]}))) on columns.

The GENERATE clause in MDX returns a concatenated string created by evaluating a string expression over a set. The EXCEPT clause evaluates two sets and removes those tuples in the first set that also exist in the second set. The DESCENDANTS clause returns the set of descendants of a member at a specified level or distance.

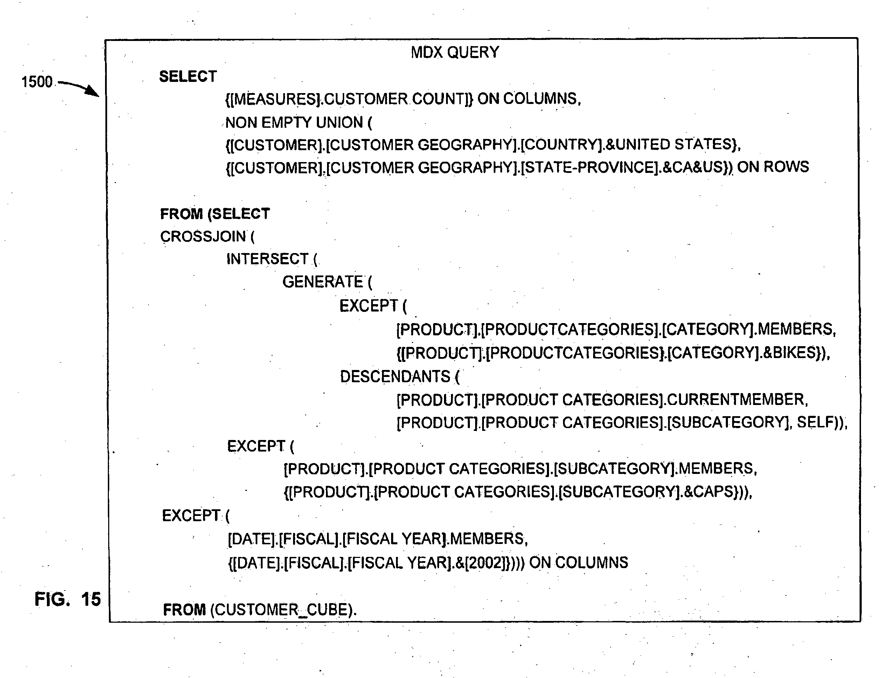

FIG. 15 depicts the MDX query 1500 of a query of FIG. 2 according to an embodiment of the invention. After translating the normalized query 1200 to first part 1305 specifying a result set, second part 1400 specifying a filter condition and the third part specifying a data source of the MDX query, the three parts are merged to form the MDX query in AS 2000 query language. Therefore, merging first part 1305, second part 1400 and the third part 1210, the MDX query 1500 reads as follows:
MDX Query =
   SELECT
      {[Measures].Customer Count]} on columns,
      Non Empty Union
      ({[Customer]. [Customer Geography].[Country].&United States},
      {[Customer].[Customer Geography].[State-Province].&Ca&Us}) on rows
   FROM (SELECT
   CROSSJOIN (
      INTERSECT (
         GENERATE(
            EXCEPT (
               [Product]. [ProductCategories]. [Category].Members,
               {[Product]. [ProductCategories].[Category].&Bikes}),
            DESCENDANTS (
               [Product]. [Product Categories].Currentmember,
               [Product].[Product Categories].[Subcategory], Self)),
         EXCEPT (
            [Product]. [Product Categories]. [Subcategory].Members,
            {[Product].[Product Categories].[Subcategory].&CAPS})),
      EXCEPT (
         [Date].[Fiscal].[Fiscal Year].Members,
         {[Date].[Fiscal].[Fiscal Year].&[2002]})) on columns
   FROM (Customer_Cube).

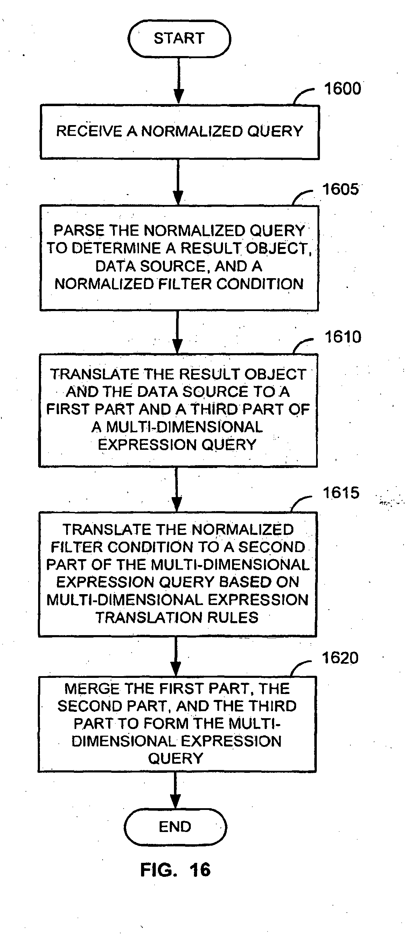

FIG. 16 is a flow diagram for converting a normalized query to a multi-dimensional expression query according to an embodiment of the invention. At process block 1600, a normalized query is received. At process block 1605, the normalized query is parsed to determine a result object, a data source and a normalized filter condition. At process block 1610, the result object and the data source are translated to a first part and a third part of the MDX query. The translation is done based on syntax of the MDX query language that includes but not limited to AS 2000, AS 2005 and MaxL.

At process block 1615, the normalized filter condition is translated to a second part of the MDX query based on MDX translation rules. In an embodiment, the MDX translation rules include rules for translating the normalized operators to MDX operators in the MDX query as described in FIG. 14. At process block 1620, the first part specifying a result set of the MDX query, the second part specifying the filter condition of the MDX query and the third part specifying the data source of the MDX query are merged to form the MDX query.

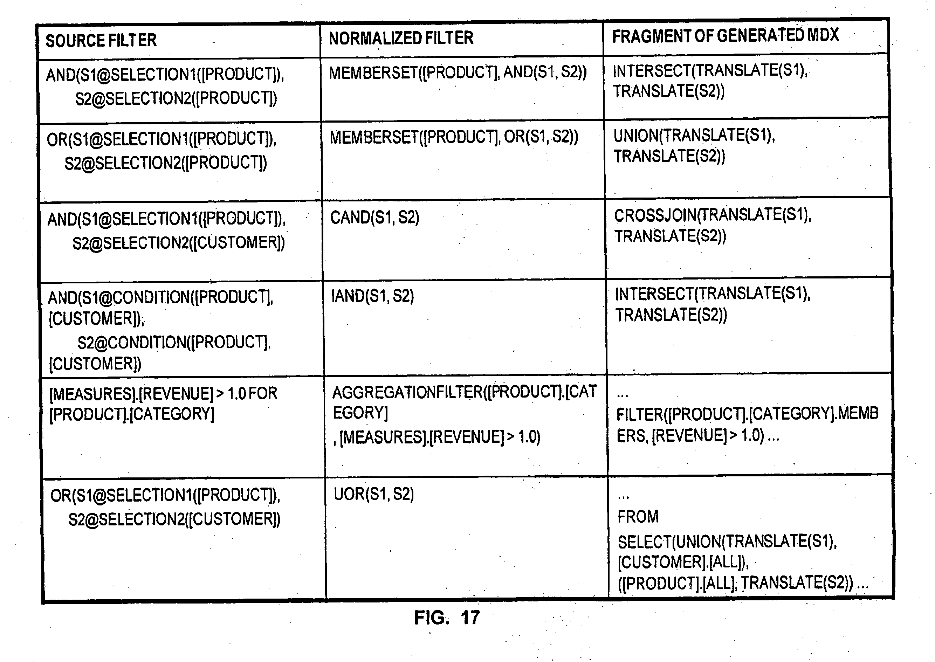

FIG. 17 depicts a table of a source query filter condition, its normalized filter condition and MDX filter condition according to an embodiment of the invention. For example, in a first row of the table,
Source filter = AND (s1@selection1 ([Product]), s2@selection2 ([Product])
Normalized filter condition = MemberSet ([Product], AND (s1, s2))
MDX filter condition = INTERSECT (translate (s1), translate (s2))
where
S1@SELECTION1[PRODUCT] is a selection condition on a PRODUCT dimension such as
Selection ([Product].[Category], neq ([Product].[Category].[Bikes])
and similarly S2 is another selection condition on the PRODUCT dimension.

In the source filter condition a logical AND operation is between two predicates S1 and S2 of the same dimension, PRODUCT. Therefore, in the normalized filter, MemberSet ([Product], AND (s1, s2)), the predicates S1 and S2 are grouped into a member set of PRODUCT and then a logical AND operation is performed between the predicates. The normalized filter translates to an INTERSECT operation between predicates (translate (S1), translate (S2)) in the MDX filter. The predicates translate (S1) and translate (S2) are translated to query languages such as AS 2000.

Other filters mentioned in rest of the rows of the table may be understood in light of the above explanation of the filter condition in the first row.

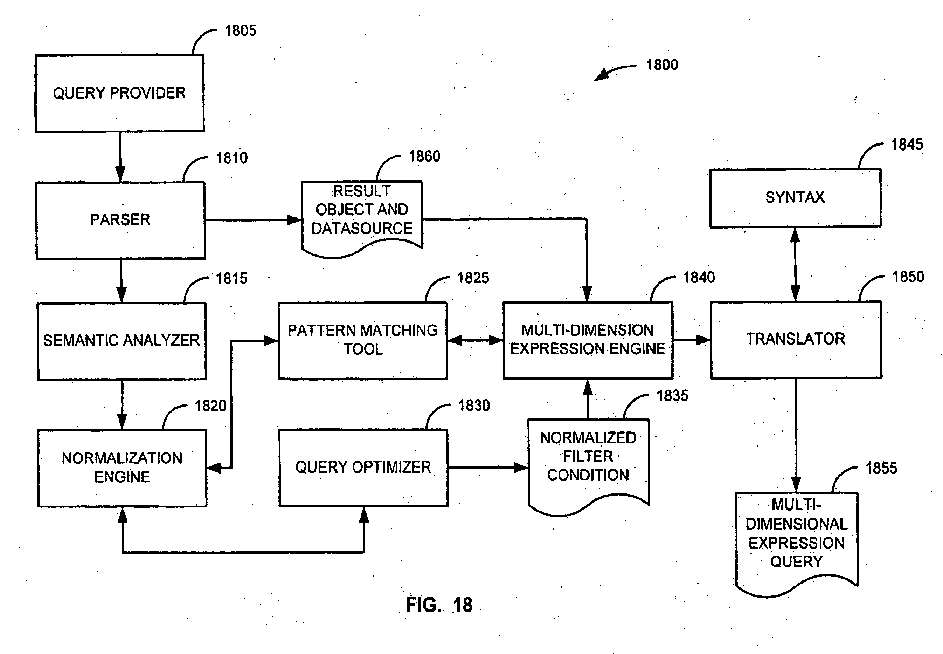

FIG. 18 is a block diagram of a system for converting a query in a first format to a MDX query in the second format according to an embodiment of the invention. System 1800 includes query provider 1805 that provides a query in the first format which is translated to MDX query 1855. The first format includes SQL, other declarative query languages, and queries created in a declarative way in tools such as Web Intelligence from Business Objects. The second format in which the MDX query is generated includes but not limited to query languages such as AS 2000, AS 2005 and MaxL.

Along with the query, query provider 1805 also provides a query specification to identify a format of the query. Based on the format of the query, different parts of the query such as result objects, a filter condition and a data source may be identified. A parser 1810 in communication with query provider 1805 parses the query to determine a result object and data source 1860 and a filter condition of the query. A semantic analyzer 1815 in communication with parser 1810 analyzes the filter condition of the query to determine a semantic context such as dimensions of predicates of the filter condition and a hierarchy level in the dimension of a member set to which a measure is aggregated. The semantic analyzer 1815 groups the predicates having a same dimension into a member set.

A normalization engine 1820 in communication with pattern matching tool 1825 normalizes the semantically analyzed filter condition by converting the filter condition to disjunctive normal form. In an embodiment, pattern matching tool 1825 includes To One Matching (TOM) framework provided by INRIA of France. The pattern matching tool 1825 has rules for converting logical expressions to disjunctive normal form, conjunctive normal form and converting between the two. The rules are based on logical equivalences. The normalization engine 1820 has rules for replacing logical operators with normalized operators. The normalization engine 1820 in communication with pattern matching tool 1825 replaces the logical operators with the normalized operators. A query optimizer 1830 optimizes the filter condition by replacing an IAND operator with a CAND operator and creates normalized filter condition 1835. This optimization may involve repeated conversions of the filter condition to disjunctive normal form and conjunctive normal form. So the query optimizer 1830 is in communication with normalization engine 1820.

The normalized filter condition 1835 and result object and data source 1860 are converted to MDX query 1855 by MDX engine 1840 and translator 1850. The MDX engine 1840 converts the normalized filter condition 1835 and result object and data source 1860 to an intermediate MDX query based on MDX translation rules. Further, the intermediate format of the MDX filter is translated to MDX query 1855 by translator 1850.

The MDX engine 1840 identifies the normalized operators in normalized filter condition 1835 and provides them to pattern matching tool 1825 along with result object and data source 1860 to convert them to the intermediate MDX query. The pattern matching tool 1825 constructs the intermediate MDX query by
- replacing the normalized operators in normalized filter condition 1835 with MDX operators;
- converting predicates in normalized filter condition 1835 to translation ready predicates. The translation ready predicates are created by concatenating a phrase "translate" with a predicate in the normalized filter condition; for instance, translate (S1) where S1 is a predicate in the normalized filter condition; and
- converting result object and data source 1860 to translation ready result object and data source in a similar way that translation ready predicates are created.
An example of the intermediate MDX query filter condition would be "CROSSJOIN (translate (S1), translate (S2))" which is a translation of a normalized filter condition CAND (S1, S2).

The translator 1850 further translates the intermediate MDX query to MDX query 1855 in a query language that includes but not limited to AS 2000, AS 2005 and MaxL. The translator 1850 obtains syntax of the query language from syntax file 1845.

Embodiments of the invention may include various steps as set forth above. The steps may be embodied in machine-executable program code which causes a general-purpose or special-purpose processor to perform certain steps. Alternatively, these steps may be performed by specific hardware components that contain hardwired logic for performing the steps, or by any combination of programmed computer components and custom hardware components.

Embodiments of the present invention may also be provided as a machine-readable medium for storing the machine-executable instructions. The machine-readable medium may include, but is not limited to, flash memory, optical disks, CD-ROMs, DVD ROMs, RAMs, EPROMs, EEPROMs, magnetic or optical cards, or any other type of machine-readable media suitable for tangibly storing electronic instructions. The machine readable medium can provide the instructions stored therein to a computer system comprising a processor capable of reading and executing the instructions to implement the method steps described herein.

It should be appreciated that reference throughout this specification to one embodiment or an embodiment means that a particular feature, structure or characteristic described in connection with the embodiment is included in at least one embodiment of the present invention. These references are not necessarily all referring to the same embodiment. Furthermore, the particular features, structures or characteristics may be combined as suitable in one or more embodiments of the invention.

Throughout the foregoing description, for the purposes of explanation, numerous specific details were set forth in order to provide a thorough understanding of the invention. It will be apparent, however, to one skilled in the art that the invention may be practiced without some of these specific details. The detailed description as set forth above includes descriptions of method steps. However, one skilled in the art will understand that the order of the steps set forth above is meant for the purposes of illustration only and the claimed invention is not meant to be limited only to the specific order in which the steps are set forth. Accordingly, the scope of the invention should be judged in terms of the claims which follow.

## Claims

1. A machine readable medium comprising computer readable instructions, which when loaded and run in a computer and/or computer network system, causes the computer system and/or the computer network system to perform operations according to a method, the method comprising:
receiving (300) a query in a first format;
parsing (305) the query to determine a filter condition in the query;
analyzing (310) the filter condition to determine a semantic context of one or more member sets of the filter condition, comprising:
identifying (500) a dimension of one or more predicates in the filter condition;
grouping (505) the one or more predicates of a same dimension into a member set; and
if (510) the filter condition has a measure, determining (515) a hierarchy level in the dimension of the one or more member sets for which the measure is aggregated;
converting (315) the filter condition into a disjunctive normal form based on the semantic context by placing disjunctions between member sets, comprising:
converting (600) the filter condition to a conjunctive normal form to identify the one or more member sets that belong to different dimensions;
grouping (605) one or more predicates of a same dimension into one of the one or more member sets of the same dimension; and
converting (610) the filter condition to the disjunctive normal form by representing the one or more member sets as a union of intersections of the one or more member sets; and
creating (320) a normalized filter condition by replacing logical operators between the one or more member sets with normalized operators.

2. The machine readable medium in claim 1, wherein determining (515) a hierarchy level in the dimension comprises determining a lowest hierarchy level in the dimension of the one or more member sets in result objects or the filter condition of the query for which the measure is aggregated.

3. The machine readable medium in claim 2 further comprising instructions for evaluating the member set using an operation selected from a group consisting of a conjunction and a disjunction after grouping the one or more predicates.

4. The machine readable medium in any one of claims 1 to 3, wherein the normalized filter condition comprises an operator selected from a group consisting of "cross-join" (CAND), "intersection-and" (IAND), "union-or" (UOR), aggregation filter, logical AND, and logical OR.

5. The machine readable medium in claim 4, wherein the normalized operators
CAND represents an intersection of member sets of different dimensions,
IAND represents an intersection of the member sets of multiple dimensions having at least one common dimension on either side of the logical AND operator,
UOR represents a union of member sets of different dimensions, aggregation filter aggregates a measure over the one or more member sets,
logical AND represents an intersection of member sets of same dimension, and
logical OR represents a union of member sets of same dimension.

6. The machine readable medium in claim 1 further comprising instructions for converting the filter condition to a normalized form containing combination of conjunctions and disjunctions using a pattern matching tool.

7. The machine readable medium in any one of claims 1 to 6, where in converting (315) the one or more member sets into a disjunctive normal form further comprises optimizing (700) the filter condition by replacing an IAND operator with a CAND operator.

8. The machine readable medium in any one of claims 1 to 7, wherein replacing the logical operators comprises replacing a logical operator with a normalized operator according to a rule selected from a group consisting of:
replacing a logical AND operator between the one or more member sets of a different dimension with a CAND operator;
replacing a logical AND operator with an IAND operator between member sets wherein the member sets on either side of the logical AND operator have at least one dimension in common; and
replacing a logical OR operator between the one or more member sets of a different dimension with an UOR operator implying a disjunction.

9. The machine readable medium in any one of claims 1 to 8, wherein the first format of the query comprises a query selected from a group consisting of a structure query language query, a query expressed in a declarative language and a query created in a declarative way using a user interface.

10. The machine readable medium in any one of claims 1 to 9 wherein the normalized filter condition conforms to a normalization graph (1100) defining a structure of the normalized filter condition.

11. A computer system including a processor and a memory, the memory comprising instructions that are executable by the processor, the instructions comprising:
a query provider to provide a query;
a semantic analyzer to analyze a filter condition of the query to determine a semantic context of one or more member sets of the filter condition, the semantic analyzer further to
identify a dimension of one or more predicates in the filter condition;
group the one or more predicates of a same dimension into a member set; and
if the filter condition has a measure, determine a hierarchy level in the dimension of the one or more member sets for which the measure is aggregated; and
a normalization engine in communication with the semantic analyzer to create a normalized filter condition having one or more member sets in a disjunctive normal form, wherein the filter condition is converted into the disjunctive normal form based on the semantic context by placing disjunctions between member sets by:
converting (600) the filter condition to a conjunctive normal form to identify the one or more member sets that belong to different dimensions;
grouping (605) one or more predicates of a same dimension into one of the one or more member sets of the same dimension; and
converting (610) the filter condition to the disjunctive normal form by representing the one or more member sets as a union of intersections of the one or more member sets.

12. The system in claim 11 further comprising a pattern matching tool in-communication with the normalization engine to define rules for converting the one or more member sets to a disjunctive normal form and a conjunctive normal form.

13. The system in claim 11 or 12 further comprising a query optimizer in communication with the normalization engine to optimize the normalized filter condition that includes replacing an "intersection-and" (IAND) operator with a "cross-join" (CAND) operator.

14. A computer implemented method for receiving a database query in a first format, and normalizing the database query into a canonical form, the method comprising:
parsing (305) a query to determine a filter condition in the query;
analyzing (310) the filter condition to determine a semantic context of one or more member sets of the filter condition, comprising:
identifying (500) a dimension of one or more predicates in the filter condition;
grouping (505) the one or more predicates of a same dimension into a member set; and
if (510) the filter condition has a measure, determining (515) a hierarchy level in the dimension of the one or more member sets for which the measure is aggregated;
converting (315) the one or more member sets into a disjunctive normal form based on the semantic context, comprising:
converting (600) the filter condition to a conjunctive normal form to identify the one or more member sets that belong to different dimensions;
grouping (605) one or more predicates of a same dimension into one of the one or more member sets of the same dimension; and
converting (610) the filter condition to the disjunctive normal form by representing the one or more member sets as a union of intersections of the one or more member sets; and
creating (320) a normalized filter condition by replacing logical operators between the one or more member sets with normalized operators.

15. The computer implemented method in claim 14, wherein converting (315) the one or more member sets into the disjunctive normal form comprises:
optimizing (615) the filter condition by replacing an "intersection-and" (IAND) operator between the one or more member sets with a "cross-join" (CAND) operator.

16. The computer implemented method in claims 14 or 15, wherein replacing logical operators comprises:
replacing a logical AND operator between the one or more member sets of a different dimension with a CAND operator implying a Cartesian product of the one or more member sets of the different dimension;
replacing a logical AND operator with an IAND operator between member sets of multiple dimensions wherein the member sets on either side of the logical AND operator have at least one dimension in common; and
replacing a logical OR operator between the one or more member sets of a different dimension with a "union-or" (UOR) operator implying a disjunction.

17. The computer implemented method in any one of claims 14 to 16 further comprising having the normalized operators in an order defined by a normalization graph (1110).

18. An article of manufacture having encoded thereon a normalization graph (1100) representing a structure of normalized operators in a normalized filter condition, the normalized operators comprising:
a CAND operator that represents an intersection of member sets of different dimensions;
an IAND operator that represents an intersection of the member sets of multiple dimensions having at least one common dimension on either side of the logical AND operator;
an UOR operator that represents an union of member sets of different dimensions;
an aggregation filter operator that aggregates a measure over the one or more member sets;
a logical AND operator that represents an intersection of member sets of same dimension; and
a logical OR operator that represents an union of member sets of same dimension.

## Patentansprüche

1. Maschinenlesbares Medium, das computerlesbare Anweisungen umfasst, die, wenn sie geladen und in einem Computer und/oder einem Computernetzwerksystem laufen gelassen werden, bewirken, dass das Computersystem und/oder Computernetzwerksystem gemäß einem Verfahren Operationen durchführen, wobei das Verfahren umfasst:
Empfangen (300) einer Abfrage in einem ersten Format;
Parsen (305) der Abfrage, um eine Filterbedingung in der Abfrage zu bestimmen;
Analysieren (310) der Filterbedingung, um einen semantischen Kontext eines oder mehrerer Mitgliedssätze der Filterbedingung zu bestimmen, was umfasst:
Identifizieren (550) einer Dimension eines oder mehrerer Prädikate in der Filterbedingung;
Gruppieren (505) des einen oder der mehreren Prädikate einer gleichen Dimension in einen Mitgliedssatz; und
wenn (510) die Filterbedingung, ein Maß hat, Bestimmen (515) einer Hierarchieebene in der Dimension des einen oder der mehreren Mitgliedssätze, für welche das Maß aggregiert wird;
basierend auf dem semantischen Kontext Konvertieren (315) der Filterbedingung in eine disjunkte Normalform, indem Disjunktionen zwischen Mitgliedssätzen angeordnet werden, was aufweist:
Konvertieren (600) der Filterbedingung in eine konjunktive Normalform, um den einen oder die mehreren Mitgliedssätze, die zu verschiedenen Dimensionen gehören, zu identifizieren;
Gruppieren (605) eines oder mehrerer Prädikate einer gleichen Dimension in den einen oder die mehreren Mitgliedssätze der gleichen Dimension; und
Konvertieren (610) der Filterbedingung in die disjunkte Normalform, indem der eine oder die mehreren Mitgliedssätze als eine Vereinigung von Schnitten des einen oder der mehreren Mitgliedssätze dargestellt werden; und
Erzeugen (320) einer normierten Filterbedingung, indem logische Operatoren zwischen dem einen oder den mehreren Mitgliedssätzen durch normierte Operatoren ersetzt werden.

2. Maschinenlesbares Medium nach Anspruch 1, wobei das Bestimmen (515) einer Hierarchieebene in der Dimension das Bestimmen einer niedrigsten Hierarchieebene in der Dimension des einen oder der mehreren Mitgliedssätze in Ergebnisobjekten oder der Filterbedingung der Abfrage, für welche das Maß aggregiert wird, umfasst.

3. Maschinenlesbares Medium nach Anspruch 2, das ferner Anweisungen umfasst, um nach dem Gruppieren des einen oder der mehreren Prädikate den Mitgliedssatz unter Verwendung einer Operation auszuwerten, die aus einer Gruppe ausgewählt wird, die aus einer Konjunktion und einer Disjunktion besteht.

4. Maschinenlesbares Medium nach einem der Ansprüche 1 bis 3, wobei die normierte Filterbedingung einen Operator umfasst, der aus einer Gruppe ausgewählt wird, die aus "Kreuzvereinigung" (CAND), "Schnitt-Und" (IAND), "vereinigendes Oder" (UOR), Aggregationsfilter, logischem UND und logischem ODER besteht.

5. Maschinenlesbares Medium nach Anspruch 4, wobei der normierte Operator CAND eine Schnittmenge von Mitgliedssätzen verschiedener Dimensionen darstellt,
IAND eine Schnittmenge der Mitgliedssätze mehrerer Dimensionen, die wenigstens eine gemeinsame Dimension auf beiden Seiten des logischen UND-Operators haben, darstellt,
UOR eine Vereinigung von Elementsätzen verschiedener Dimensionen darstellt,
Aggregationsfilter ein Maß über ein oder mehrere Mitgliedssätze aggregiert,
logisches UND eine Schnittmenge von Mitgliedssätzen gleicher Dimension darstellt, und
logisches ODER eine Vereinigung von Mitgliedssätzen gleicher Dimension darstellt.

6. Maschinenlesbares Medium nach Anspruch 1, das ferner Anweisungen zum Konvertieren der Filterbedingung in eine normierte Form, die eine Kombination von Konjunktionen und Disjunktionen enthält, unter Verwendung eines Musterbearbeitungswerkzeugs umfasst.

7. Maschinenlesbares Medium nach einem der Ansprüche 1 bis 6, wobei das Konvertieren (315) des einen oder der mehreren Mitgliedssätze in eine disjunkte Normalform ferner das Optimieren (700) der Filterbedingung durch Ersetzen eines IAND-Operators durch einen CAND-Operator umfasst.

8. Maschinenlesbares Medium nach einem der Ansprüche 1 bis 7, wobei das Ersetzen logischer Operatoren das Ersetzen eines logischen Operators durch einen normierten Operator gemäß einer Regel umfasst, die aus einer Gruppe ausgewählt wird, die besteht aus:
Ersetzen eines logischen UND-Operators zwischen dem einen oder den mehreren Mitgliedssätzen verschiedener Dimension durch einen CAND-Operator;
Ersetzen eines logischen UND-Operators durch einen IAND-Operator zwischen Mitgliedssätzen, wobei die Mitgliedssätze auf beiden Seiten des logischen UND-Operators wenigstens eine Dimension gemeinsam haben; und
Ersetzen eines logischen ODER-Operators zwischen dem einen oder den mehreren Mitgliedssätzen verschiedener Dimension durch einen UOR-Operator, der eine Disjunktion impliziert.

9. Maschinenlesbares Medium nach einem der Ansprüche 1 bis 8, wobei das erste Format der Abfrage eine Abfrage umfasst, die aus einer Gruppe ausgewählt wird, die aus einer Strukturabfrage, Sprachabfrage, einer Abfrage, die in einer deklarativen Sprache ausgedrückt ist, und einer Abfrage, die in einer deklarativen Weise unter Verwendung einer Benutzerschnittstelle erzeugt wird, besteht.

10. Maschinenlesbares Medium nach einem der Ansprüche 1 bis 9, wobei die normierte Filterbedingung einem normierten Graphen (1100) entspricht, der eine Struktur der normierten Filterbedingung definiert.

11. Computersystem mit einem Prozessor und einem Speicher, wobei der Speicher Anweisungen umfasst, die von dem Prozessor ausführbar sind, wobei die Anweisungen umfassen:
einen Abfragebereitsteller zum Bereitstellen einer Abfrage;
einen Semantikanalysator, um eine Filterbedingung der Abfrage zu analysieren, um einen semantischen Kontext eines oder mehrerer Mitgliedssätze der Filterbedingung zu analysieren, wobei der Semantikanalysator ferner:
eine Dimension eines oder mehrerer Prädikate in der Filterbedingung bestimmen soll;
das eine oder der die mehreren Prädikate gleicher Dimension in einen Mitgliedssatz gruppieren soll; und
wenn die Filterbedingung ein Maß hat, eine Hierarchieebene in der Dimension des einen oder der mehreren Mitgliedssätze, für welche das Maß aggregiert wird, bestimmen soll;
eine Normierungsmaschine in Kommunikation mit dem Semantikanalysator, um eine normierte Filterbedingung mit einem oder mehreren Mitgliedssätzen in einer disjunkten Normalform zu erzeugen, wobei die Filterbedingung basierend auf dem semantischen Kontext in die disjunkte Normalform konvertiert wird, indem Disjunktionen zwischen Mitgliedssätzen angeordnet werden, indem:
die Filterbedingung in eine konjunktive Normalform konvertiert wird (600), um den einen oder die mehreren Mitgliedssätze, die zu verschiedenen Dimensionen gehören, zu identifizieren;
ein oder mehrere Prädikate einer gleichen Dimension in den einen oder die mehreren Mitgliedssätze der gleichen Dimension gruppiert werden (605); und
die Filterbedingung in die disjunkte Normalform konvertiert wird (610), indem der eine oder die mehreren Mitgliedssätze als eine Vereinigung von Schnitten des einen oder der mehreren Mitgliedssätze dargestellt werden.

12. System nach Anspruch 11, das ferner ein Musterabgleichwerkzeug in Kommunikation mit der Normierungsmaschine umfasst, um Regeln für die Konvertierung des einen oder der mehreren Mitgliedssätze in eine disjunkte Normalform oder eine konjunktive Normalform zu definieren.

13. System nach Anspruch 11 oder 12, das ferner einen Abfragenoptimierer in Kommunikation mit der Normierungsmaschine umfasst, um die normierte Filterbedingung zu optimieren, was das Ersetzen eines "Schnitt-Und-" (IAND-) Operators durch einen Kreuzvereinigungs-" (CAND-) Operator umfasst.

14. Computerimplementiertes Verfahren zum Empfangen einer Datenbankabfrage in einem ersten Format und Normieren der Datenbankabfrage auf eine kanonische Form, wobei das Verfahren umfasst:
Parsen (305) der Abfrage, um eine Filterbedingung in der Abfrage zu bestimmen;
Analysieren (310) der Filterbedingung, um einen semantischen Kontext eines oder mehrerer Mitgliedssätze der Filterbedingung zu bestimmen, was umfasst:
Identifzieren (550) einer Dimension eines oder mehrerer Prädikate in der Filterbedingung;
Gruppieren (505) des einen oder der mehreren Prädikate mit einer gleichen Dimension in einen Mitgliedssatz; und
wenn (510) die Filterbedingung ein Maß hat, Bestimmen (515) einer Hierarchieebene in der Dimension des einen oder der mehreren Mitgliedssätze, für welche das Maß aggregiert wird;
basierend auf dem semantischen Kontext Konvertieren (315) des einen oder der mehreren Mitgliedssätze in eine disjunkte Normalform, was aufweist:
Konvertieren (600) der Filterbedingung in eine konjunktive Normalform, um den einen oder die mehreren Mitgliedssätze, die zu verschiedenen Dimensionen gehören, zu identifizieren;
Gruppieren (605) eines oder mehrerer Prädikate einer gleichen Dimension in den einen oder die mehreren Mitgliedssätze der gleichen Dimension; und
Konvertieren (610) der Filterbedingung in die disjunkte Normalform, indem der eine oder die mehreren Mitgliedssätze als eine Vereinigung von Schnitten des einen oder der mehreren Mitgliedssätze dargestellt werden; und
Erzeugen (320) einer normierten Filterbedingung, indem logische Operatoren zwischen dem einen oder den mehreren Mitgliedssätzen durch normierte Operatoren ersetzt werden.

15. Computerimplementiertes Verfahren nach Anspruch 14, wobei das Konvertieren (315) des einen oder der mehreren Mitgliedssätze in die disjunkte Normalform umfasst:
Optimieren (615) der Filterbedingung durch Ersetzen eines "Schnitt-Und-" (IAND-) Operators zwischen dem einen oder den mehreren Mitgliedssätzen durch einen Kreuzvereinigungs-" (CAND-) Operator.

16. Computerimplementiertes Verfahren nach Anspruch 14 oder 15, wobei das Ersetzen logischer Operatoren umfasst:
Ersetzen eines logischen UND-Operators zwischen dem einen oder den mehreren Mitgliedssätzen verschiedener Dimension durch einen CAND-Operator, was ein kartesisches Produkt des einen oder der mehreren Mitgliedssätze verschiedener Dimension impliziert;
Ersetzen eines logischen UND-Operators durch einen IAND-Operator zwischen Mitgliedssätzen mehrerer Dimensionen, wobei die Mitgliedssätze auf beiden Seiten des logischen UND-Operators wenigstens eine Dimension gemeinsam haben; und
Ersetzen eines logischen ODER-Operators zwischen dem einen oder den mehreren Mitgliedssätzen verschiedener Dimension durch einen "vereinigenden ODER-" (UOR-) Operator, der eine Disjunktion impliziert.

17. Computerimplementiertes Verfahren nach einem der Ansprüche 14 bis 16, das ferner die normierten Operatoren in einer Reihenfolge umfasst, die durch einen Normierungsgraphen (1110) definiert ist.

18. Fertigungsartikel, der einen Normierungsgraphen (1100) darauf codiert hat, der eine Struktur normierter Operatoren in einer normierten Filterbedingung dargestellt, wobei die normierten Operatoren umfassen:
einen CAND-Operator, der eine Schnittmenge von Mitgliedssätzen verschiedener Dimensionen darstellt;
einen IAND-Operator, der eine Schnittmenge der Mitgliedssätze mehrerer Dimensionen darstellt, die wenigstens eine gemeinsame Dimension auf beiden Seiten des logischen UND-Operators haben;
einen UOR-Operator, der eine Vereinigung von Mitgliedssätzen verschiedener Dimensionen darstellt;
einen Aggregationsfilteroperator, der ein Maß über den einen oder die mehreren Mitgliedssätze aggregiert;
einen logischen UND-Operator, der eine Schnittmenge von Mitgliedssätzen gleicher Dimension darstellt; und
einen logischen ODER-Operator, der eine Vereinigung von Mitgliedssätzen gleicher Dimension darstellt.

## Revendications

1. Support lisible par machine comprenant des instructions lisibles par ordinateur qui, lors de son chargement et exécution dans un système informatique et/ou de réseau informatique, amène le système informatique et/ou le système de réseau informatique à réaliser des opérations selon un procédé, le procédé comprenant :
recevoir (300) une requête dans un premier format ;
analyser de manière syntaxique (305) la requête pour déterminer une condition de filtre dans la requête ;
analyser (310) la condition de filtre pour déterminer un contexte sémantique d'un ou plusieurs ensembles d'éléments de la condition de filtre, comprenant :
identifier (500) une dimension d'un ou plusieurs prédicats dans la condition de filtre ;
regrouper (505) le ou les prédicats d'une même dimension dans un ensemble d'éléments ; et
si (510) la condition de filtre a une mesure, déterminer (515) un niveau de hiérarchie dans la dimension du ou des ensembles d'éléments pour lesquels la mesure est agrégée ;
convertir (315) la condition de filtre en une forme normale disjonctive en fonction du contexte sémantique en plaçant des disjonctions entre des ensembles d'éléments, comprenant :
convertir (600) la condition de filtre en une forme normale conjonctive pour identifier le ou les ensembles d'éléments qui appartiennent à différentes dimensions ;
regrouper (605) un ou plusieurs prédicats d'une même dimension en un du ou des ensembles d'éléments de la même dimension ; et
convertir (610) la condition de filtre en la forme normale disjonctive en représentant le ou les ensembles d'éléments comme une union d'intersections du ou des ensembles d'éléments ; et
créer (320) une condition de filtre normalisée en remplaçant des opérateurs logiques entre le ou les ensembles d'éléments par des opérateurs normalisés.

2. Support lisible par machine selon la revendication 1, dans lequel déterminer (515) un niveau de hiérarchie dans la dimension comprend déterminer un niveau de hiérarchie le plus bas dans la dimension du ou des ensembles d'éléments dans des objets de résultat ou la condition de filtre de la requête pour laquelle la mesure est agrégée.

3. Support lisible par machine selon la revendication 2, comprenant en outre des instructions pour évaluer l'ensemble d'éléments en utilisant une opération sélectionnée parmi un groupe constitué d'une conjonction et d'une disjonction après le regroupement du ou des prédicats.

4. Support lisible par machine selon l'une quelconque des revendications 1 à 3, dans lequel la condition de filtre normalisée comprend un opérateur sélectionné parmi un groupe constitué de « cross-join » (CAND), « intersection-et » (IAND), « union-ou » (UOR), filtre d'agrégation, ET logique et OU logique.

5. Support lisible par machine selon la revendication 4, dans lequel les opérateurs normalisés
CAND représente une intersection d'ensembles d'éléments de différentes dimensions,
IAND représente une intersection des ensembles d'éléments de multiples dimensions ayant au moins une dimension commune d'un côté ou de l'autre de l'opérateur ET logique,
UOR représente une union d'ensembles d'éléments de différentes dimensions, un filtre d'agrégation agrège une mesure sur le ou les ensembles d'éléments,
ET logique représente une intersection d'ensembles d'éléments de même dimension, et
OU logique représente une union d'ensembles d'éléments de même dimension.

6. Support lisible par machine selon la revendication 1, comprenant en outre des instructions pour convertir la condition de filtre en une forme normalisée contenant une combinaison de conjonctions et de disjonctions en utilisant un outil d'appariement de formes.

7. Support lisible par machine selon l'une quelconque des revendications 1 à 6, dans lequel convertir (315) le ou les ensembles d'éléments en une forme normale disjonctive comprend en outre optimiser (700) la condition de filtre en remplaçant un opérateur IAND par un opérateur CAND.

8. Support lisible par machine selon l'une quelconque des revendications 1 à 7, dans lequel remplacer les opérateurs logiques comprend remplacer un opérateur logique par un opérateur normalisé en fonction d'une règle sélectionnée parmi un groupe constitué de :
remplacer un opérateur ET logique entre le ou les ensembles d'éléments d'une différente dimension par un opérateur CAND ;
remplacer un opérateur ET logique par un opérateur IAND entre des ensembles d'éléments, dans lequel les ensembles d'éléments d'un côté ou de l'autre de l'opérateur ET logique ont au moins une dimension en commun ; et
remplacer un opérateur OU logique entre le ou les ensembles d'éléments d'une différente dimension par un opérateur UOR impliquant une disjonction.

9. Support lisible par machine selon l'une quelconque des revendications 1 à 8, dans lequel le premier format de la requête comprend une requête sélectionnée parmi un groupe constitué d'une requête de structure, d'une requête de langage, d'une requête exprimée dans un langage déclaratif et d'une requête créée de manière déclarative en utilisant une interface utilisateur.

10. Support lisible par machine selon l'une quelconque des revendications 1 à 9, dans lequel la condition de filtre normalisée se conforme à un graphe de normalisation (1100) définissant une structure de la condition de filtre normalisée.

11. Système informatique incluant un processeur et une mémoire, la mémoire comprenant des instructions qui sont exécutables par le processeur, les instructions comprenant :
un fournisseur de requête pour fournir une requête ;
un analyseur sémantique pour analyser une condition de filtre de la requête afin de déterminer un contexte sémantique d'un ou plusieurs ensembles d'éléments de la condition de filtre, l'analyseur sémantique devant en outre
identifier une dimension d'un ou plusieurs prédicats dans la condition de filtre ;
regrouper le ou les prédicats d'une même dimension dans un ensemble d'éléments ; et
si la condition de filtre a une mesure, déterminer un niveau de hiérarchie dans la dimension du ou des ensembles d'éléments pour lesquels la mesure est agrégée ; et
un moteur de normalisation en communication avec l'analyseur sémantique pour créer une condition de filtre normalisée ayant un ou plusieurs ensembles d'éléments dans une forme normale disjonctive, dans lequel la condition de filtre est convertie en la forme normale disjonctive en fonction du contexte sémantique en plaçant des disjonctions entre des ensembles d'éléments en :
convertissant (600) la condition de filtre en une forme normale conjonctive pour identifier le ou les ensembles d'éléments qui appartiennent à différentes dimensions ;
regroupant (605) un ou plusieurs prédicats d'une même dimension en un du ou des ensembles d'éléments de la même dimension ; et
convertissant (610) la condition de filtre en la forme normale disjonctive en représentant le ou les ensembles d'éléments comme une union d'intersections du ou des ensembles d'éléments.

12. Système selon la revendication 11, comprenant en outre un outil d'appariement de formes en communication avec le moteur de normalisation pour définir des règles pour convertir le ou les ensembles d'éléments en une forme normale disjonctive et une forme normale conjonctive.

13. Système selon la revendication 11 ou 12, comprenant en outre un optimisateur de requête en communication avec le moteur de normalisation pour optimiser la condition de filtre normalisée qui inclut remplacer un opérateur « intersection-et » (IAND) par un opérateur « cross-join » (CAND).

14. Procédé mis en oeuvre par ordinateur pour recevoir une requête de base de données dans un premier format et normaliser la requête de base de données en une forme canonique, le procédé comprenant :
analyser de manière syntaxique (305) une requête pour déterminer une condition de filtre dans la requête ;
analyser (310) la condition de filtre pour déterminer un contexte sémantique d'un ou plusieurs ensembles d'éléments de la condition de filtre, comprenant :
identifier (500) une dimension d'un ou plusieurs prédicats dans la condition de filtre ;
regrouper (505) le ou les prédicats d'une même dimension dans un ensemble d'éléments ; et
si (510) la condition de filtre a une mesure, déterminer (515) un niveau de hiérarchie dans la dimension du ou des ensembles d'éléments pour lesquels la mesure est agrégée ;
convertir (315) le ou les ensembles d'éléments en une forme normale disjonctive en fonction du contexte sémantique, comprenant :
convertir (600) la condition de filtre en une forme normale conjonctive pour identifier le ou les ensembles d'éléments qui appartiennent à différentes dimensions ;
regrouper (605) un ou plusieurs prédicats d'une même dimension en un du ou des ensembles d'éléments de la même dimension ; et
convertir (610) la condition de filtre en la forme normale disjonctive en représentant le ou les ensembles d'éléments comme une union d'intersections du ou des ensembles d'éléments ; et
créer (320) une condition de filtre normalisée en remplaçant des opérateurs logiques entre le ou les ensembles d'éléments par des opérateurs normalisés.

15. Procédé mis en oeuvre par ordinateur selon la revendication 14, dans lequel convertir (315) le ou les ensembles d'éléments en la forme normale disjonctive comprend :
optimiser (615) la condition de filtre en remplaçant un opérateur « intersection-et » (IAND) entre le ou les ensembles d'éléments par un opérateur « cross-join z (CAND).

16. Procédé mis en oeuvre par ordinateur selon la revendication 14 ou 15, dans lequel remplacer des opérateurs logiques comprend :
remplacer un opérateur ET logique entre le ou les ensembles d'éléments d'une différente dimension par un opérateur CAND impliquant un produit cartésien du ou des ensembles d'éléments de la différente dimension ;
remplacer un opérateur ET logique par un opérateur IAND entre des ensembles d'éléments de multiples dimensions, dans lequel les ensembles d'éléments d'un côté ou de l'autre de l'opérateur ET logique ont au moins une dimension en commun ; et
remplacer un opérateur OU logique entre le ou les ensembles d'éléments d'une différente dimension par un opérateur « union-ou » (UOR) impliquant une disjonction.

17. Procédé mis en oeuvre par ordinateur selon l'une quelconque des revendications 14 à 16, comprenant en outre avoir les opérateurs normalisés dans un ordre défini par un graphe de normalisation (1110).

18. Article de fabrication ayant encodé sur lui un graphe de normalisation (1100) représentant une structure d'opérateurs normalisés dans une condition de filtre normalisée, les opérateurs normalisés comprenant :
un opérateur CAND qui représente une intersection d'ensembles d'éléments de différentes dimensions ;
un opérateur IAND qui représente une intersection des ensembles d'éléments de multiples dimensions ayant au moins une dimension commune d'un côté ou de l'autre de l'opérateur ET logique ;
un opérateur UOR qui représente une union d'ensembles d'éléments de différentes dimensions ;
un opérateur de filtre d'agrégation qui agrège une mesure sur le ou les ensembles d'éléments ;
un opérateur ET logique qui représente une intersection d'ensembles d'éléments de même dimension ; et
un opérateur OU logique qui représente une union d'ensembles d'éléments de même dimension.
